# EUROPEAN PATENT APPLICATION

(11) **EP 0 996 264 A1**
(43) Date of publication of application: **26.04.2000**
(21) Application number: 98118144.9
(22) Date of filing: 24.09.1998
(51) Int. Cl.: H04L 29/06, G06F 17/30

(54) **File transfer method and apparatus**

(71) Applicant: Bowne Global Solutions Germany GmbH, 82008 Unterhaching (DE)
(72) Inventor: Caroll, Trisha, c/o Bowne Global Solutions, Dublin 2 (IE); Rittinghouse, John, Bowne Global Solutions -, Los Angeles, CA 90048 (US); Hanaoker, Christopher, Bowne Global Solutions -, Los Angeles, CA 90048 (US); Hoppenrath, Detlef, c/o Bowne Global Solutions, 82008 Unterhaching (DE); Kantz, Eckhard, c/o Bowne Global Solutions, 82008 Unterhaching (DE); Ahrensdorf, Stefan, c/o Bowne Global Solutions, 82008 Unterhaching (DE)
(74) Representative: Betten & Resch

(57) **Abstract**

A master process is provided which selects one client process of a plurality of client processes under control of which a file transfer is to be performed, the selection being based on one or more of certain criteria such as client load, client location, or connectivity information related to the client's connectivity.

## Description

### Field of the Invention

The invention relates to a method and an apparatus for transferring data between computer systems over a computer network, in particular a TCP/IP based network, in a completely automated way which does not require user intervention and provides a very high degree of fault-tolerance, security, data-safety and redundancy.

### Background of the Invention

Transmission of data via public networks such as the internet became a standard issue for both private and business users during the last years. However, the available mechanisms to achieve this (FTP, Web access etc.) are limited and usually do not provide a high degree of fault-tolerance, redundancy or built-in intelligence.

Due to the character and topology of the internet and its protocols, transmissions are often interrupted or fail which results in frequent retransmissions, requiring human intervention or supervision. In addition transfers via such networks are insecure and rely on the quality and stability of the users connectivity. An estimate of the required transfer time can thus usually not be made. Also, direct transfers between two independent sites cannot be initiated from a third party.

### Summary of the Invention

It is therefore an object of the invention to provide an improved method and apparatus for performing a file transfer.

According to an aspect of the present invention at least one master process is provided which selects one client process of a plurality of client processes under control of which the file transfer is performed, the selection being based on one or more of certain criteria such as client load, client location, or connectivity information related to the client's connectivity.

Thereby it becomes possible to perform the file transfer under control of a client which serves best to the requirements of the user, let them be such demands as high speed, high reliability of the transfer, or the like.

Preferred embodiments of the invention provide a safe, secure, intelligent and fault-tolerant automatic method and apparatus of transferring data via public or private TCP/IP networks on user request by additionally taking into account such criteria as the expected transmission time or by providing a plurality of master processes which increases the fault tolerance of the method and the apparatus according to such an embodiment of the invention.

In a further preferred embodiment the invention provides the capability of routing and/or rerouting the transfer so that this embodiment does not require user intervention or supervision even in the event of transmission problems. Users do not require special software to initiate or schedule transfers and will be provided with an estimate of the required transmission time and E-mail notifications about the result of the transfer.

In a further preferred embodiment the system is able to cope with all possible transmission problems, reschedule or reroute any transfers and notify sender and recipient of the data about any delays or problems. An intelligent method is provided to find alternative routes if a route or network backbone should fail during the transmission.

In the following the invention will be described by illustrative embodiments in connection with the accompanying drawings, in which:
Figure 1 shows a flow chart of the master process according to an embodiment of the invention;
Figure 2 illustrates an embodiment of the invention employing multiple master processes;
Figure 3 illustrates the operation of a client process according to an embodiment of the invention;
Figure 4 illustrates a rerouting process according to an embodiment of the invention; and
Figure 5 illustrates a queue example for rerouting process according to an embodiment of the invention.

### Description of the preferred embodiments

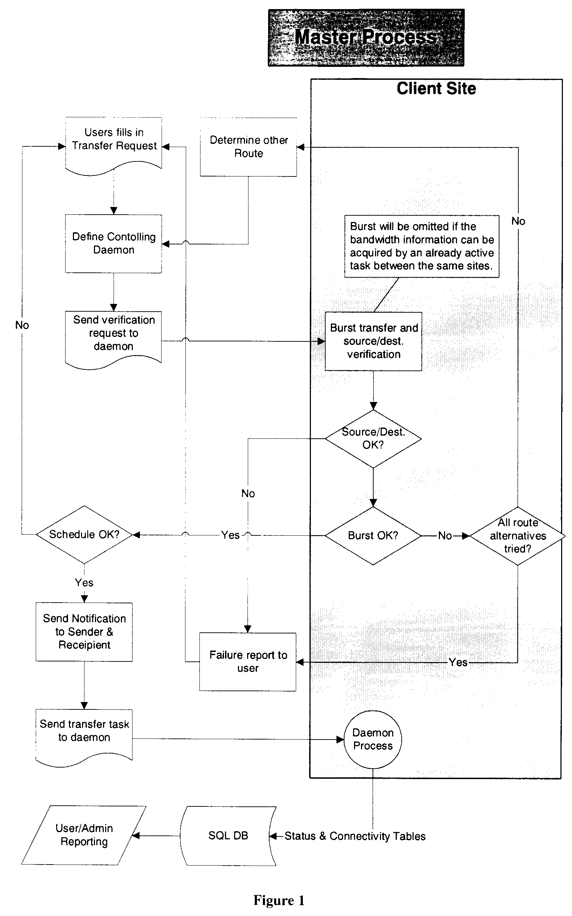

According to the first embodiment, the method of the invention employs a master process and a client process. Figure 1 illustrates by means of a flow chart the operation of the master process.

The master is responsible for receiving requests for a file transfer. It is connected to a plurality of client processes which constantly collect information about their connectivity status. This information is passed to the master and based on this information the master process selects a client process which from then on is responsible for controlling the execution of the file transfer.

Elements of the system may be the following components:
- The Master: A central system (web host with database interface) which allows users or systems to enter file transfer requests and which administers and processes them.
- The Client: Clients are daemons who are communicating with the master and actually process the transfer requests. To transfer a file between two systems it is not necessary to have a client running on any of the systems - a client is also capable of initiating and controlling a transfer between two systems remotely.

Clients preferably are communicating among each other and the master by means of a proprietary protocol. All clients continuously collect information about their own connectivity and pass this information over to the master. From the collected information of all clients a routing table will be built by the master. The master will thus be able to determine the perfect control client for a transfer. Given a situation where a direct transfer between two sites cannot be performed because of insufficient line quality (packet loss etc.), the system must be able to reroute the transfer via more reliable systems. This concept is described in detail below.

It might happen that a direct transfer between two systems will fail or be very slow due to bad line quality while a transfer via one or more other systems might be very fast and reliable. In this case the rerouting mechanism described in detail below will be employed.

The system is able to process transfer requests entered by an user completely automatically. Before initiating the transfer, an estimate of the expected transfer time is made by performing a burst transfer (which also verifies source and target). Based on this information the master decides whether it is possible to transfer the file within the specified time frame or not.

If the time frame is sufficient, the transfer is initiated by one of the daemons (= clients) in the system which will be picked by the master based on the available routing information. If the time frame is not sufficient or the quality of the connection is too low, the master will determine whether the transfer can be routed via other systems with better performance.

Any transfer is controlled and supervised by a daemon who will be determined by the master. If problems or connection losses are encountered during a transfer the daemon will initiate a new transfer provided the remaining time is sufficient. Also, the client notifies the master immediately about any problems during the transfer. Also, during the transfer, the success of the transfer will be constantly reported to the master. Again, the master will reroute an active transfer if the line quality drops too low for a specific time and better alternatives are available.

Based upon the transfer, the clients will also update and communicate their connectivity matrix.

Basically, the master represents an network-connected system, e.g. to the Internet, with the following functions:
- Web site for transfer requests (input, administration, status)
- Communication with other daemons
- Determination of which client will take control in a transfer or of the routing path if a direct transfer cannot be performed.
- Maintain lists of current transfers as well as users and user groups and synchronize these lists with other daemons.

The design of the web site is as follows:
- Input mask for new transfer requests
- Status form for existing transfers (a status report will also be delivered by E-mail to sender and recipient)
- Administration form which gives detailed status information about all transfers and allows to reschedule/restart aborted transfers or to abort active transfers.
- Input and editing masks for the management of users, user groups and their rights
- Search masks to perform auditing and statistical consolidation on the log databases or files

Alternatively the master might also get transfer requests directly from another system (e.g. from a workflow system). Therefore it is preferably possible to initiate those requests directly via an API or interface (e.g. by passing all required parameters to a CGI script).

In order to make it possible that the workflow system issues a multitude of transfer requests at the same time, it is possible to pass a list of transfer request in one step to the master process using the API/interface.

The master stores all user input (path of source and destination file, E-mail addresses of sender and recipient, specified transfer time, begin and end of the transmission, transmission status and IP address of the sender) and status reports from the clients in a database or log files.

The master transfers control of the communication to one or more clients who will periodically send status reports about the status of the transfer and the estimated delivery time to the master. After finishing the transfer the master is notified by the client about the successful delivery or any abort conditions if the transfer could not be processed within the specified time frame.

As soon as the user issued the transfer request, the master performs the following:
- Determine which client(s) will control and process the transfer. Provided source and destination system are equipped with a client, a proprietary protocol is used for the transfer. Otherwise the transfer is performed via standard protocols, preferably FTP. If neither the source nor the destination system are equipped with a client, the transfer will be controlled by an independent client on any other system. The controlling client will be determined by the master based on the routing matrix - it will be the client who has the best and most reliable connection to source and destination system. Other criteria may include the load, the number of transfers already handled by the client, or the location of source or destination. If only one system, either source or destination, is equipped with a client this system will preferably control the transfer to reduce transfer time and costs.
- Transfer control to the controlling client who performs a burst transmission in order to determine bandwidth, estimated delivery time and verify source and destination path. The result of the burst transfer is communicated to the master (source ok?, destination ok?, estimated delivery time, any problems during the burst).
- Determine whether the transfer can be performed within the required time frame (based on the results of the burst transfer).
- If a delivery within the time frame is not possible or if a direct transfer turns out to be unreliable, the master will determine another, better route based on the routing matrix. It might happen that a file will be transferred via several intermediate systems in order to use the most reliable and fastest route.
- If a timely delivery finally turns out to be impossible, the current client notifies the user (the initiator of the transfer request).

According to a further embodiment of the present invention there are employed a plurality of master processes.

Advantegeous features of the system are safety, reliability and fault tolerance and redundancy. To accomplish this, all clients are preferably able to work completely independent from a master. As soon as the master delivered a transfer request to the controlling client this client will be in charge of the transfer until it is finished or a reroute request was received by the master. However, the client will be in communication with the master during the transfer to keep the master informed about the success of the transfer. Also, clients pass over other information like their connectivity tables frequently to the master.

This may create three possible problems:
1. There must be a master available at any time to accept transfer requests from
2. users or automatic systems and to issue status reports to users.
3. There must be a master available at any time to accept status reports.
4. A single master might get overloaded.

To overcome these possible bottlenecks, a multiple master topology is preferably used to guarantee redundancy and provide a certain degree of leveraging.

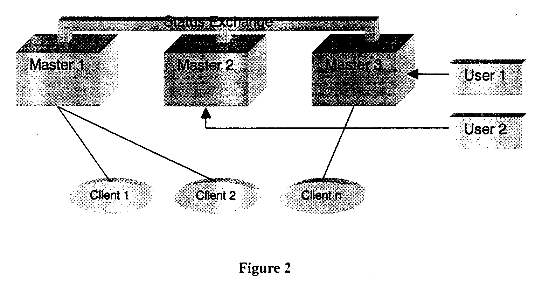

In this topology, several master systems exist, as illustrated in Figure 2. All clients (as well as all masters) are equipped with a host list containing all addresses of all masters. Any client will select its primary master based on the best connectivity. If this master cannot be contacted anymore, another one will be chosen by the client. As soon as the client established communication with the master it selected, this master will know that it is the primary master for this client. All masters are constantly in contact with each other and exchange tables of their tasks so that any master will have a complete table of all tasks in the systems and will also know which master and client(s) are responsible for a particular transfer.

According to a further embodiment of the invention, the problems arising when connectivity is lost or a master failure happens are dealt with. For this purpose, three possible scenarios have to be considered.
Scenario 1 - total master failure or total loss of connectivity: All transfers controlled by this master will continue automatically at the client side, but the clients will not be able to deliver status reports any more. Since all clients who used this master as primary master will detect that the master is not available any longer, they will select another primary master based upon connectivity. After finishing open transfers, the client will notify the new primary master and the transfer will marked as closed in the database. As soon as the master comes back, clients might elect this master again as the primary master (while still finishing other transfers with the previous master).
Scenario 2 - master losing connectivity to other masters but is still available for clients users: In this case the master will be an "island" and will not have updated status reports about any transfers except the transfers which it is controlling. If a user issues a status query for a transfer which is controlled by another master, the "island" master will answer the query with the last information it has and provide the user with a link to the controlling master who should have the latest status information. If the user holds the connection, the master will update the status information as soon as connectivity to the other masters is restored (after synchronizing the own task list with the new information from the other masters).
Scenario 3 - Inconsistent task tables: Task tables should never get inconsistent since any system is just sending a list of its own tasks to all other masters (and they are compiled locally to a complete list). However, a master might use old tables due to connectivity problems to other masters. In this case the master would be able to recognize by the time stamp that it did not receive updates and change to "island mode, i.e. answer all status requests concerning tasks in old tables with an additional link to the controlling master.

According to a further embodiment a client which may be used in connection with a master of any of the previous embodiments is configured as will be described in the following.

As explained earlier, the daemon's function preferably covers the following areas:
- preparation of transfers (coordinated by the master)
- independent execution of transfers (initiated by the master)
- proxying of routing requests issued by the master
- controlling agent for a transfer between two ftp sites
- permanent collection of statistical data about connection quality, performance and reliability plus connectivity to other clients. From this information a connectivity table is created which is communicated to the master. Based on the exchanged information, the master will build a three-dimensional routing table which can be used to determine the most efficient and/or reliable routes between two or more systems depending on time of day and time zones.

A client can perform three different roles:
- **Controlling client:** the client is in control of a transfer but is not necessarily the source or destination of the transfer. The controlling client will usually be the client on the destination system in a proprietary protocol transfer or an arbitrary client in a ftp-to-ftp transfer.
- **Proxy:** The client acts as "man in the middle" and forwards the transfer to the next hop. It is not in control of the transfer (and just has control over a part of the connection).
- **Source/Destination client:** the client sends or receives data from or to its own system, but is not necessarily in control of the transfer and does not perform proxy services.

The daemon process is initiated by the master and according to a preferred embodiment will perform the following activities:
- After receiving the transfer request from the master, a burst is performed in order to determine bandwidth, estimated delivery time and verify source and destination path.
- Based on the result of the burst, the estimated time of delivery will be calculated with respect to all other tasks in the clients queue. The master's time can be used as time base for all clients to avoid confusion by incorrect local system clocks.
- The result of the burst transfer is communicated to the master (source ok?, destination ok?, estimated delivery time, any problems during the burst).
- If the requested delivery time can be met, the task is entered into the client's queue for processing (new requests will added at the end of the queue - FIFO).
- As soon as the client started the actual transmission, the master preferably is notified. Also the master preferably is immediately notified if the estimated delivery time should have changed in the meantime or after starting the transfer.
- If the transfer is performed between two clients, the proprietary protocol will be used in order to guarantee an efficient, error-free, transmission error-tolerant transfer.
- If only one client is controlling the transfer, standard protocols will be used for the transfer (preferably FTP).
- In any case (FTP or proprietary protocol) REGET or an equivalent function should be supported if the transfer should fail.
- During the transfer the client preferably sends periodic status reports to the master, containing updated information about the estimated time for delivery and the number of bytes already transferred. This information will be made available to the user by the master.
- If the transfer aborts for any reason, the component being in control of the transfer will determine if there is enough time to reschedule the transfer. If this is not the case, the master will determine, if alternative, faster routes can be used. Also alternative protocols should be taken into consideration.
- Should the master determine that the file cannot be delivered by the client and that there are better connections, the master will issue an abort and a reroute request.
- If the transfer fails completely (no time available, no faster routes available), an optional SMTP transfer preferably is provided as last resort. On the transfer request web page preferably there is a button to set this option. If a transfer fails completely, the file will then be sent by SMTP to the recipients E-mail address, e.g. provided the file size does not exceed 5 MB.
- In any case - successful transfer or not - the sender and recipient of the file preferably are notified about the result of the transfer by E-mail.

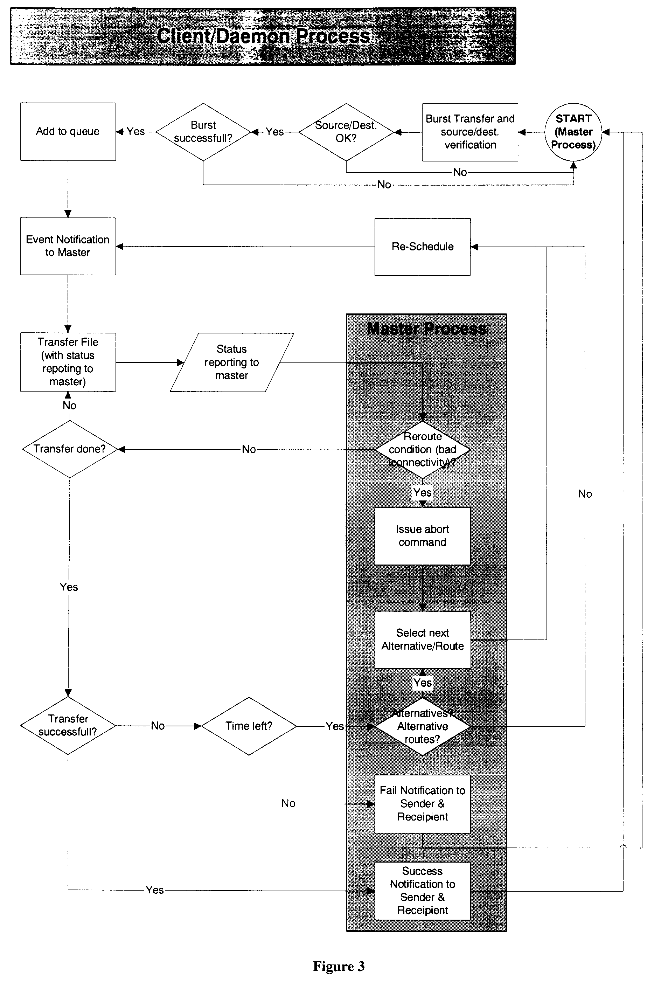

The client processes are illustrated in the flow chart in Figure 3.

In the following a client according to a further specific embodiment of the present invention is described in more detail. The client as described in the following may be applied in connection with the masters described before.

According to this further embodiment the present invention is capable of dealing with some potential problems which arise from overloading clients on their queues, such as:
- Several thousand file transfers may be requested at one time
- Reroute requests by the master will change the ETAs in the queues of all affected systems
- Rescheduling of failed transfers
- Drop of bandwidth

To allow optimum leveraging of the available bandwidth and avoid queue overloading and feedback effects which might lead to a total crash of the entire systems, a queue concept, intelligent rerouting and a bandwidth leveraging concept is used. A detailed description follows later on.

According to a further embodiment of the invention there are certain criteria for file transfers.

Any file transfer is initiated by the master who selects a controlling agent for the transfer (this client is not necessarily source, destination or proxy). The main criteria for transfers may be reliability, so the masters first priority is safe delivery of the file. The second priority may for example be to make the requested transfer time. Therefore a transfer will never be aborted only because of time problems.

Since some transfer requests might be delivered by automatic systems (like a workflow system) who do not care about delivery time, there preferably is also an option to set the transfer time to "don't care". Also ability of users to enter the requested delivery time preferably is limited to a fixed values (like flash, 3 hrs, 6 hrs, 12 hrs, 24hrs, 1..7 days).

Any file transfer preferably is done in a safe manner, i.e. the integrity of the file is guaranteed and the system must not overwrite existing files on the destination system.

In the following, there will be outlined in more detail an embodiment which deals with the rerouting of tasks.

One feature of the system is the ability to reroute tasks which are failing because of bad connectivity. As stated before, the master will appoint a controlling client for any new task and this client will be in charge of the transfer. The client (any client) also informs the master periodically about the status of all tasks and collects statistical data about connection quality, performance and reliability to all other clients. From this information a connectivity table is created which is communicated to the master. Based on the exchanged information, the master will build a three-dimensional routing table which can be used to determine the most efficient and/or reliable routes between two or more systems depending on time of day and time zones.

The rerouting mechanism operates as described in the following.

If a task begins to fail, the master will decide whether the task can and shall be rerouted by a set of rules. An important role of these rules may consist in avoiding constant rerouting in shaky connections (which might result in feedback effects and an overload of the entire system). Also the bandwidth of a connection might go down for a limited time (due to other connections) but recover shortly after that. Thus the main rule preferably are thresholds.
**Efficiency rule:** A reroute of an active task will only be performed if there are alternatives which are more efficient by at least 25%.
**Time rule:** Failure to deliver a file within the requested time frame is not necessarily a reason for rerouting.
**Threshold rule:** A reroute of an active task will be performed if the bandwidth or packet loss reaches a certain limit within a defined time frame. There can be three different limits (values for percentage and time are only examples, the specific values can be adjusted appropriately.
   - If the master does not receive any feedback from the client or the client reports a connectivity which is almost zero, rerouting for this client will start after 10 minutes
   - If the clients connectivity goes down by more than 75% for more than 15 minutes, rerouting for this client will be started.
   - If the clients connectivity goes down by more than 50% for more than 20 minutes, the master will begin rerouting of endangered tasks.

During rerouting, clients may have one of two roles:
- Controlling client: Will accept only one active reroute at a given time and insert all other requests in which this client has to perform the controlling role at the top of the queue (i.e. as idle tasks which will be executed next and before all other waiting transfers).
- Proxy/destination: All clients not being the controlling client are either proxies (i.e. they forward all packets to the next hop in the route) or they are the destination system. In either case they will accept any request immediately and execute it.

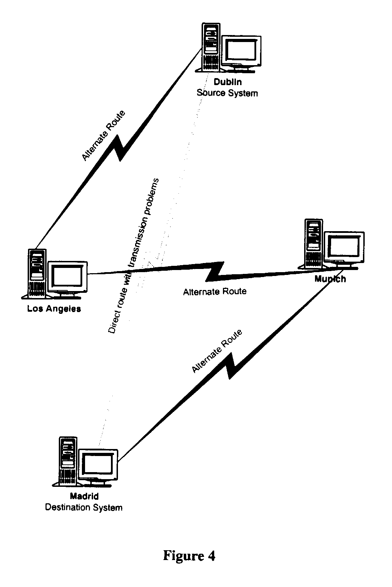

Alternative routing might thus look like e.g. shown in Figure 4.

According to a further embodiment of invention, there is continuously maintained a statistics on the connectivity of the clients.

When a client is executed the first time, one of its first activities preferably is to register with the master. At this time, the master also provides the client with a list of all other clients (and updates the list of the other clients with the new client). This mechanism guarantees that all clients know at any time about all other clients is the system. This information is necessary since all clients are constantly measuring their own connectivity to other clients in order to gather connectivity data which is used by the master to compile a routing matrix.

Any client will constantly connect to any other client in the system and thus determine the availability of the other clients (lately, percentage of packet loss). One simple realization of such a connect would for example be to ping another client in regular intervals. Preferably the bandwidth (throughput) is measured as well. Based on the data gained by checking the connectivity the client constructs a table representing its connectivity statistics.

After transmitting the own table to the master, the master compiles a resulting three-dimensional routing matrix, reflecting the availability and route quality between all clients during the last 24 hours.

Traceroute can be used to determine possible problems in the route and avoid them.

The main reason for the requirement to route through other systems is the different peering between backbones/providers in a network, e.g. today's Internet. It might thus happen that a specific site has a very bad connection to another site while its communication with all other sites is perfect.

According to a further embodiment of the invention the rerouting of tasks is performed in a certain manner which will be described in the following.

Rerouted tasks are always accepted by a client as priority tasks, even when MCT active tasks are already running. The master will be responsible not to overload a client. However, a client will preferably only be controlling client for one reroute task at any given time (and queue all other reroute tasks it is supposed to control as the next task to become active). Clients who are having only proxy or destination functions in a reroute request ("man in the middle") preferably need to accept any proxy request immediately.

It might be useful to keep a separate queue for reroutes since they are processed independently from other tasks anyway.

In the configuration information of the client the bandwidth of the clients network connection can be specified to ensure that the client can calculate the maximum number of concurrent tasks (MCT). The configuration information preferably has two notations for bandwidth - either the MCT or a bandwidth specification which will be used by the client to calculate the MCT. A client will only allow as may concurrent tasks as specified in the configuration information.

The MCT is calculated based on the total bandwidth available on the site's network connection, assuming that MCT tasks can share a bandwidth of n KB, assuming that there must be remaining bandwidth for m unknown tasks like mail transmissions and other traffic. The ideal ratio n:m can be adjusted appropriately, it is preferable to use a non-linear function for the calculation of the MCT.

Reroute tasks are considered to be emergencies and will thus always be accepted in addition to the (already running) active tasks, which might result in bandwidth drops. MCT does not apply to reroute tasks.

The queue rules thereby preferably are as follows.

Any queue entry has one of five possible states:
- **Active** - the task is currently being processed
- **Waiting** - the task is queued for processing
- **Active Reroute** - the task is an active reroute task
- **Waiting Reroute** - the task is an active reroute task
- **Reroute Idle** - the task is a tasks which failed and which will be resumed as reroute as soon as other reroute tasks are finished

If a client receives a transfer request, this task preferably is inserted into the queue according to the following rules:
1. If a standard transfer request is received **and** the number of active tasks <MCAT, the task is inserted as active into the queue (i.e. the transfer starts immediately).
2. If a standard transfer request is received **and** the number of active tasks >=MCAT, the task is inserted as waiting into the queue (i.e. the transfer does not start yet).
3. If a reroute request is received **and** the number of active reroute tasks <MCRT **and** no other reroute task is active, the task is inserted as active into the queue (i.e. the transfer starts immediately).
4. If a reroute request is received **and** the number of active reroute tasks >=MCRT **or** another reroute task is active, the task is inserted as waiting into the **reroute** queue (i.e. the transfer does not start yet).
5. If a task on the controlling client fails **and** becomes a reroute task on the same system **and** no other reroutes are active, it will continue as active reroute immediately.
6. If a task on the controlling client fails **and** becomes a reroute task on the same system **and** other reroutes are active, it stays in the queue, change its status to active reroute and sets the status of the last active reroute task to reroute idle (i.e. this task is paused to give the existing task priority).

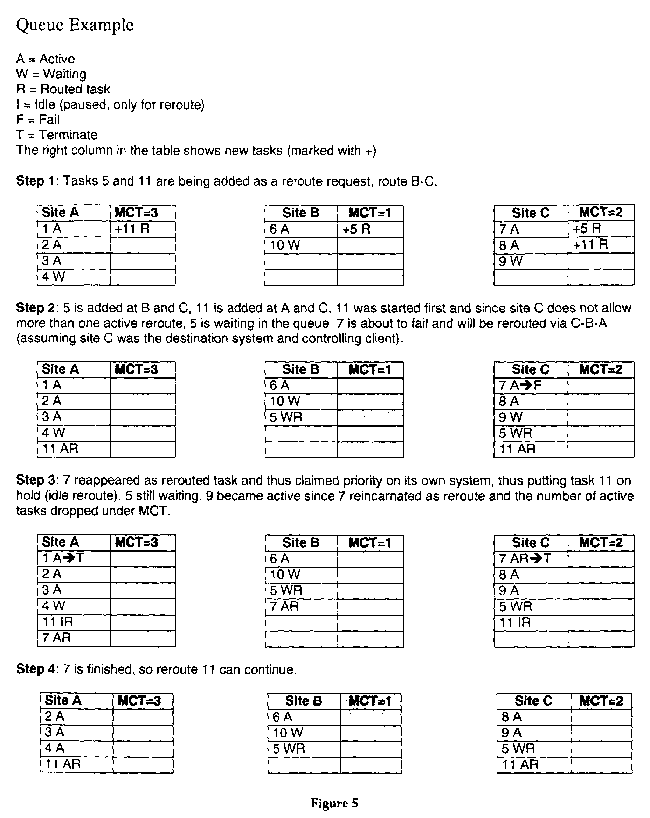

A queue example is illustrated in Figure 5.

According to a further embodiment of the present invention, security considerations are also taken into account.

The present invention in some of its embodiments may be a very sensitive system since any client has full access to the system it is running on. Without additional security measures any other client can gain access to any file on this system. Also a client could register with the master and would then be trusted by the master (and would even be appointed to be controlling client in transfers).

To avoid abuse of the system and control access, the following security measures preferably are introduced:
- Transfer requests require authentication at the master. Users will have to log in (even transfers requested by automated systems like a workflow systems will be required to log in).
- The administration module only shows the tasks belonging to a specific user. User groups can be introduced in combination with the ability to assign group administration rights (so that administrators for specific user groups can be assigned).
- Client-to-client, master-to-client and any other communication between processes, e.g. via the API/interface preferably is encrypted and connections need to be authenticated as well. The actual transfers between clients can be seen as part of the communication and are encrypted as well.
- Any master has a list of all authorized clients to make sure only these clients can register at the master. Master and clients will use a unique key which depends on the name or address of the system. This data may be compiled into the code or maintained in an encrypted list. This ensures no client or master in the system can communicate with any other network according to the invention. However there preferably is "anonymous" option which allows unauthorized access for any other system (like anonymous FTP).
- Any client will have a permission file where the administrator can define which access rights to resources like servers, shares or directories should be granted (read/write). By default preferably access is denied to all resources.

According to a further embodiment of the present invention, the system may support several further andvantegeous features.

To allow a flexible scheduling of transfer request both masters and clients as well as the input mask preferably allow the following:
- Periodic transfers as a repeated occurence of the same transfer request. A specific transfer from the same source to the same destination will be performed after each given period of time, e.g. every hour, every 12 hours, every week etc.
- Similar the system will support scheduled transfers were the request specifies a future date and time.
- A combination of both which is a periodic transfer that is to be performed the first time at a future date, e.g. repeated each Friday and executed the first time on the next Friday to come.
- A scheduled transfer that is perfomed as soon as the source file becomes available. The system will repeatedly check the presence of the given source after a given period of time and start the transfer as soon as the file becomes available.

To allow a cost efficient distribution from one source to multiple destinations both masters and clients as well as the input mask preferably provide the following:
- Transfer requests with one source and multiple destinations.
- Transfer requests over a route with one source, one or more proxying clients and multiple destinations, e.g. from A through B to C and D.
- "Drop-on-route" transfers were a copy of the transfered file is kept on each client system being part of a route.

The method according to the invention may be realized by executing it on a computer system, an apparatus according to the invention may for example be realized by providing a computer system which comprises means adapted to perform the steps according to the method of the invention. A computer program product may comprise a medium which comprises code which causes a computer to execute a method in accordance with the invention. Such a medium may be a floppy disk, a CD-ROM, or any storage device, it may further also consist in a network interface which either transmits the commands causing a computer to perform a method according to the invention to this computer, or which transmits data resulting from an execution of a method according to the invention on another computer system to a computer system of the user.

The present invention in the foregoing has been described by means of certain embodiments which are for illustrative purposes. It is clear that some features of one embodiment may be combined with features of another embodiment, as far as such a combination is feasible for an expert reading the specification. For example the security mechanisms described in the last embodiment may also be applied in connection with a multiple master process scenario. Similar modifications are readily apparent to an expert, in particular as far as combinations of individual features of embodiments of the invention as illustrated in the foregoing description are concerned.

## Claims

1. A method of performing a file transfer via a computer network, said method comprising:
providing at least one master process for receiving and processing file transfer requests;
providing a plurality of client processes which are communicating with the at least one master process and which collect information about their own connectivity and pass this information to the master process;
selecting a client process by the master process based on one or more of the following criteria: connectivity information and/or client load and/or client location;
performing the file transfer under control of the selected client process.

2. A method of according to claim 1, wherein said clients periodically perform one or more of the following steps:
informing the master about the status of all tasks;
collecting statistical data about connection quality and/or performance and/or reliability to other clients;
generating a connectivity table based on the collected information and communicating said table to the master process, and wherein said master process performs one or more of the following:
building a routing table;
determining the most efficient route or routes between two or more clients.

3. A method according to claim 1 or 2, further comprising:
determining as to whether the file transfer to be controlled by the selected client fulfills certain criteria, wherein said criteria may contain one of the following:
expected transmission time to perform the transfer;
efficiency and/or reliability of the selected client compared with possible other clients;
checking whether the transfer is completed within a given time frame;
checking whether the bandwidth or packet loss reaches a certain limit.

4. A method according to one of the preceeding claims, further comprising:
rerouting the requested file transfer via one or more other clients than the selected, if the transmission via the current route is not fulfilling certain predetermined criteria.

5. A method according to one of the preceeding claims, wherein the expected transfer time for the file transfer controlled by the client is estimated by performing a burst transmission.

6. A method according to any of the preceeding claims, further comprising at least one of the following steps:
routing and/or rerouting the file transfer via intermediate clients, if the direct connection is not satisfactory or becomes unreliable;
maintaining a database by the master process on data received either by transfer requests and/or from the clients.

7. A method according to any of the preceeding claims, further comprising:
providing a plurality of master processes, said master processes being in contact with each other.

8. A method according to any of the preceeding claims, wherein at least one of said one or more masters comprises one or more of the following:
maintaining a list of users and user groups with their access rights;
maintaining a list of master and client systems;
synchronizing said lists with other masters and clients;
maintaining a list of file transfers that may be synchronized with other masters.

9. A method according to any of the preceeding claims, wherein at least one of said one or more masters comprises the following:
a control interface, encrypted or non-encrypted, to other processes which are not master processes.

10. A method according to one of claims 7 to 9, wherein each client has an associated master as primary master and selects another master as primary master if the current primary master becomes unavailable.

11. A method according to any of the preceeding claims, wherein said client process perfoms one or more of the following steps:
preparation of transfers;
independent execution of transfers;
proxying of routing requests issued by the master;
acting as a controlling agent for a transfer between two ftp sites;
notifying the master about the activity of the client;
if the transfer aborts, checking as to whether enough time to reschedule the transfer is left;
notifying sender and recipient of the transferred file about the result of the tranfer;
handling reroute tasks with high priority.

12. A method according to any of the preceeding claims, wherein said method comprises one or more of the following:
support of periodic transfers;
scheduling transfers to a future date and time;
scheduling transfers as soon as a file becomes available;
support of direct distribution transfers;
support of indirect distribution transfers;
support of "drop-on-route" transfers;
support transfers of groups of files given by a pattern.

13. A method according to any of the preceeding claims, wherein said method for security purposes comprises one or more of the following:
requiring authentication at the master for transfer requests;
showing the personal tasks to a specific user by the administration module;
encrypting client-to-client and/or master-to-client communication and/or requesting authentication of their respective connections;
maintaining a list of all authorized clients at any master;
providing a permission list at the client to define which access rights are granted.

14. An apparatus for performing a file transfer via a computer network, said apparatus comprising:
means for providing at least one master process for receiving and processing file transfer requests;
means for providing a plurality of client processes which are communicating with the at least one master process and which collect information about their own connectivity and pass this information to the master process;
means for selecting a client process by the master process based on one or more of the following criteria: connectivity information and/or client load and/or client location;
means for performing the file transfer under control of the selected client process.

15. An apparatus according to claim 14, further comprising:
means for performing any combination of any of the steps defined in one of claims 2 to 13.

16. Computer program product comprising:
a computer-usable medium having computer-readable program code means embodied therein for causing a computer to
provide at least one master process for receiving and processing file transfer requests;
provide a plurality of client processes which are communicating with the at least one master process and which collect information about their own connectivity and pass this information to the master process;
select a client process by the master process based on one or more of the following criteria: connectivity information and/or client load and/or client location;
perform the file transfer under control of the selected client process.
